# EUROPÄISCHE PATENTSCHRIFT

(11) **EP 3 271 774 B1**
(45) Veröffentlichungstag und Bekanntmachung des Hinweises auf die Patenterteilung: **05.05.2021**
(21) Anmeldenummer: 16706884.0
(22) Anmeldetag: 01.03.2016
(51) Int. Cl.: G02B 27/01, G06T 3/40

(54) **VORRICHTUNG UND VERFAHREN ZUR WIEDERGABE VON DATEN IN EINER ERWEITERTEN REALITÄT**
DEVICE AND METHOD FOR REPRODUCING DATA IN AN AUGMENTED REALITY
DISPOSITIF ET PROCÉDÉ DE REPRODUCTION DE DONNÉES DANS UNE RÉALITÉ ÉTENDUE

(30) Priorität: 17.03.2015 DE 102015204746
(43) Veröffentlichungstag der Anmeldung: 24.01.2018
(73) Patentinhaber: Bayerische Motoren Werke Aktiengesellschaft, 80809 München (DE)
(72) Erfinder: GRAEF, Michael, 82166 Graefelfing (DE); KAUFMANN, Matthias Roland, 85716 Unterschleißheim (DE); SPIESSL, Wolfgang, 80807 München (DE)
(86) Internationale Anmeldenummer: PCT/EP2016/054259
(87) Internationale Veröffentlichungsnummer: WO 2016/146371

(56) Entgegenhaltungen:
- WO-A1-2005/124694
- DE-A1-102006 029 510
- DE-A1-102008 028 303
- DE-A1-102013 203 162
- US-A1- 2014 072 231

## Beschreibung

Die Erfindung betrifft eine Vorrichtung und ein Verfahren zur Wiedergabe von Daten in einer erweiterten Realität für einen Insassen eines Fahrzeugs.

Bei Fahrzeugen wird allgemein als störend empfunden, dass, unabhängig davon, in welche Richtung der Fahrer seinen Blick wendet, jeweils Bildausschnitte existieren, die von nicht-transparenten Fahrzeugteilen überdeckt werden. Der Fahrer oder auch ein anderer Insasse weiß daher nicht, was sich hinter diesen Fahrzeugteilen verbirgt. Dies kann auf der einen Seite einfach unbequem sein, auf der anderen Seite kann dies aber auch ein großes Sicherheitsrisiko darstellen, insbesondere beim Rückwärtsfahren oder auch beim Abbiegen, wo niedrige Gegenstände oder Lebewesen nicht wahrgenommen werden.

Insbesondere bei Cabriolet-Fahrzeugen, bei welchen ausschließlich die A-Säule als Überrollbügel dient, wird auch der Sichtbereich in Fahrtrichtung durch solche Fahrzeugteile stark eingeschränkt.

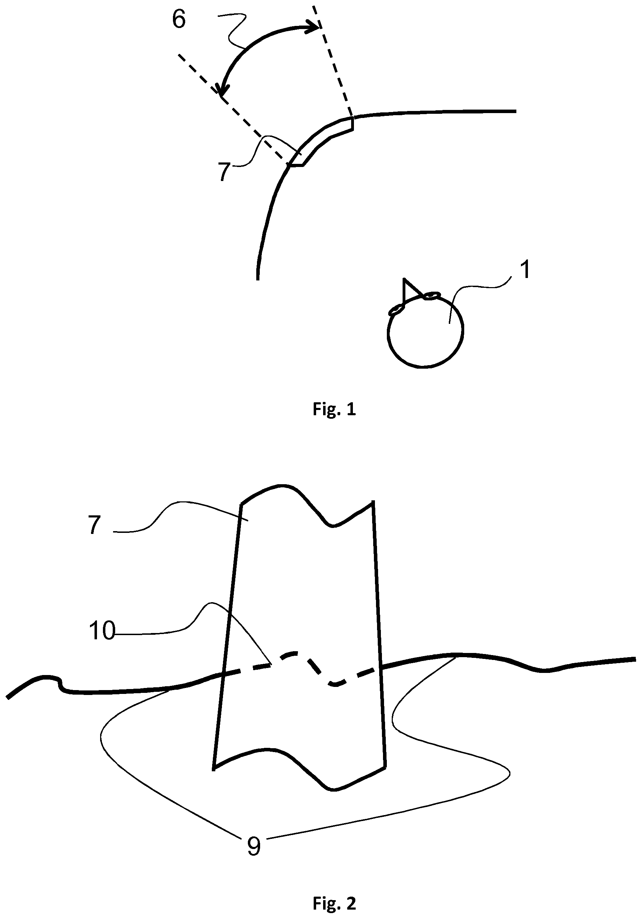

In den Figuren 1 und 2 ist eine typische Verdeckung des Sichtfeldes des Fahrers dargestellt. Ein Bildausschnitt 6, welcher durch ein Fahrzeugteil 7, in diesem Fall eine A-Säule eines Kraftfahrzeugs, im Sichtfeld eines Insassen 1 verdeckt wird, ist beispielhaft in Fig. 1 dargestellt. In Fig. 2 ist die Kontur 9, 10 einer Landschaft oder eines Objekts dargestellt, welches sich sowohl im für den Insassen 1 sichtbaren Bereich 9 wie auch in dem für den Fahrer durch das nicht-transparente Fahrzeugteil 7 abgedeckten Abschnitt 10 des Sichtfelds erstreckt. Schließlich haben die nicht-transparenten Fahrzeugteile auch eine beengende Wirkung auf die Insassen eines Fahrzeugs. Umso transparenter eine Fahrzeugkabine nach außen ist, desto angenehmer und großzügiger empfinden die Insassen im Allgemeinen den Innenraum.

Vor diesem Hintergrund ist es aus dem Stand der Technik bekannt, verschiedene nicht-transparente Fahrzeugteile durch Projektion oder auch durch das Vorsehen eines Displays auf den Fahrzeugteilen zu überblenden:
Die DE 10 2013 203 162 A1 offenbart beispielsweise ein virtuelles Sonnendachsystem zum Vorsehen eines virtuellen Sonnendachs an einer Innenseite eines Fahr-zeugs zum Betrachten durch einen Insassen des Fahrzeugs.

Die DE 10 2008 028 303 A1 betrifft ein Anzeigesystem, das eine Szene außerhalb eines Fahrzeugs auf einem im Fahrzeug angeordneten Anzeigemittel anzeigt.

Die WO2005/124694 A1 offenbart eine Vorrichtung und ein Verfahren zum Anzeigen eines Bildes der Umgebung für einen Benutzer, dessen Sichtfeld auf diese Umgebung eingeschränkt ist. Dabei umfasst die Vorrichtung eine Vielzahl von Kameras, die Bilder der Umgebung aufzeichnen und an eine Zentraleinheit zur Auswertung übertagen. Das Sichtfeld des Benutzers wird durch eine Kopfkamera erfasst. Die Erfindung umfasst, dass die Zentraleinheit eine virtuelle 3D-Welt erzeugt, in der Bildinformationen in Echtzeit von der Bildsensorvorrichtung als Texturen in einer 3D-Welt projiziert werden. Teile der 3D-Welt werden dann auf der Anzeigevorrichtung in Echtzeit angezeigt.

Die DE 10 2006 029510 A1 bezieht sich auf ein Kraftfahrzeug mit einer Säule, die eine Sicht auf eine Umgebung des Kraftfahrzeugs versperrt, wobei das Kraftfahrzeug eine Kamera zum Aufnehmen eines Bildes der Umgebung des Kraftfahrzeugs hat, zu der die Säule dem Fahrer des Kraftfahrzeugs die Sicht versperrt. Die Oberfläche der Säule hat eine Anzeigevorrichtung, zum Anzeigen des von der Kamera aufgenommenen Bildes. Ein Verzerrungsmodul erzeugt eine vom Sichtfeld des Fahrers abhängige Verzerrung des aufgenommenen Bildes der Umgebung mittels Homographischer Methoden, so dass der Insasse eine seinem Sichtfeld entsprechende Darstellung des von der Säule verdeckten Umgebungsbereichs erhält.

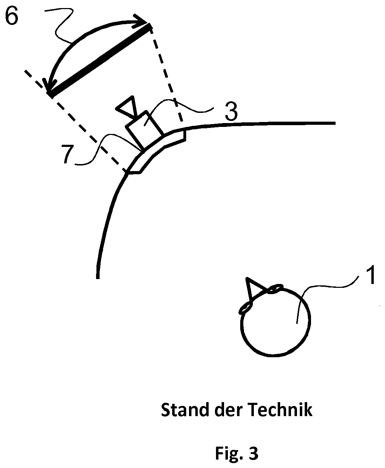

Wie in Fig. 3 dargestellt, ist bei den bekannten Systemen im Allgemeinen im Außenbereich des Fahrzeugs eine erste Kamera 3 angeordnet, welche wenigstens jenen Bildausschnitt 6 im Sichtfeld des Insassen 1 filmt, welchen dieser aufgrund eines nicht-transparenten Fahrzeugteils 7 nicht einsehen kann. Diese Außenaufnahme wird auf das nicht-transparente Fahrzeugteil 7 projiziert bzw. auf einem da-rauf angeordneten Display angezeigt. Hierbei erweist es sich jedoch als schwierig, die Bildwiedergabe auf dem nicht-transparenten Fahrzeugteil 7 perspektivisch so exakt zu gestalten, dass an den Rändern des nicht-transparenten Fahrzeugteils 7 zu den für den Insassen 1 einsehbaren Bildausschnitten seines Sichtfelds ein nahtloser kontinuierlicher Übergang des Bildes ohne Verschiebungen und Artefakte entsteht.

Ausgehend von diesem Stand der Technik hat die Erfindung zur Aufgabe, eine Vorrichtung und ein Verfahren bereitzustellen, welche das Überblenden von Fahrzeugteilen, insbesondere nicht-transparenten Fahrzeugteilen, verbessert und dem Insassen eines Fahrzeugs damit ein angenehmeres Fahrgefühl und sicheren Fahrbetrieb eines Fahrzeugs ermöglichen.

Diese Aufgabe wird durch eine Vorrichtung nach Anspruch 1 und ein Verfahren nach Anspruch 7 gelöst. Vorteilhafte Ausgestaltungen werden in den abhängigen Ansprüchen beansprucht. Der Wortlaut der Ansprüche wird durch ausdrückliche Bezugnahme zum Inhalt der Beschreibung gemacht.

Eine erfindungsgemäße Vorrichtung zur Wiedergabe von Daten in einer erweiterten Realität für einen Insassen eines Fahrzeugs weist eine erste Einrichtung, eingerichtet zum Ermitteln eines Sichtfelds des Insassen auf, insbesondere einen sogenannten Head-Tracker mit mikroelektromechanischen Systemen (MEMS) und/oder einem optischen Head-Tracker. Eine solche Vorrichtung weist des Weiteren eine erste Kamera, eingerichtet zum Filmen eines Außenberichts des Fahrzeugs und eine zweite Kamera, eingerichtet zum Filmen des Sichtfelds auf. Es ist eine Verarbeitungsvorrichtung mit wenigstens einem ersten Modul vorgesehen, welche zum Bestimmen von ersten Daten auf der Grundlage des erfassten Sichtfelds und des fehlenden Außenbereichs eingerichtet ist, welche wenigstens einem Bildausschnitt in dem Sichtfeld, welcher von einem oder mehreren nicht-transparenten Fahrzeugteilen, insbesondere einer Fahrzeugsäule und/oder einer Fahrzeugwand, verdeckt wird, entsprechen. Die Bearbeitungseinrichtung weist des Weiteren ein zweites Modul auf, eingerichtet zum Bestimmen von zweiten Daten auf der Grundlage des gefilmten Sichtfelds, welche den wenigstens einen verdeckten Bildausschnitt charakterisieren und ein drittes Modul, eingerichtet zum Abgleichen der ersten Daten mit den zweiten Daten, auf. Weiter weist die Verarbeitungsvorrichtung ein viertes Modul, eingerichtet zum Korrigieren der ersten Daten auf der Grundlage der zweiten Daten, auf. Schließlich weist die Vorrichtung zur Wiedergabe von Daten des Weiteren ein sogenanntes Head-Mounted-Device (HMD), d.h. eine am Kopf des Insassen anbringbare Wiedergabeeinrichtung, insbesondere eine Datenbrille, eingerichtet zum Wiedergeben der korrigierten ersten Daten als erweiterte Realitäten in wenigstens einem verdeckten Bildausschnitt, auf.

Ein erfindungsgemäßes Verfahren zur Wiedergabe von Daten in einer erweiterten Realität für einen Insassen eines Fahrzeugs, insbesondere für einen Fahrer, weist folgende Arbeitsschritte auf: Ermitteln eines Sichtfelds des Insassen, insbesondere mittels Head-Trackings, erstes Filmen wenigstens eines Außenbereichs um das Fahrzeug, erstes Bestimmen von ersten Daten auf der Grundlage des erfassten Sichtfelds des gefilmten Außenbereichs, welche wenigstens einen Bildausschnitt im Sichtfeld, welcher von einem oder mehreren Fahrzeugteilen, insbesondere einer Fahrzeugsäule und/oder einer Fahrzeugwand verdeckt wird, entsprechen; zweites Filmen des Sichtfelds, insbesondere aus einer Perspektive, welche an der Sichtachse eines Head-Mounted-Device, insbesondere einer Datenbrille oder des Insassen ausgerichtet ist; zweites Bestimmen von zweiten Daten auf der Grundlage des gefilmten Sichtfelds, welche den wenigstens einen verdeckten Bildausschnitt charakterisieren; Abgleichen der ersten Daten mit den zweiten Daten; Korrigieren der ersten Daten auf der Grundlage der zweiten Daten; und Wiedergabe der korrigierten ersten Daten als erweiterte Realität für den wenigstens einen verdeckten Bildausschnitt in dem Head-Mounted-Device.

Ein Modul im Sinne der Erfindung kann sowohl als Hardware-Komponente der Verarbeitungseinrichtung 5 wie auch als deren Software-Komponente ausgebildet sein.

Die Erfindung basiert auf dem Ansatz, einer Wiedergabe eines verdeckten Bildausschnitts des Sichtfelds eines Insassen eines Fahrzeugs perspektivisch der Position des Insassen im Fahrzeug anzupassen. Erfindungsgemäß wird hierfür einerseits das Sichtfeld des Insassen ermittelt. Betriebsbekannte Verfahren zum Ermitteln des Sichtfelds sind sogenannte Tracking-Verfahren, z.B. magnetische Tracker, akustische Tracking-Verfahren und optische Tracking-Verfahren, mit welchen eine Position und eine Orientierung eines Insassen bzw. dessen Kopfes bzw. eines Head-Mounted-Devices (HMD) auf dem Kopf des Insassen ermittelt werden kann. Aufgrund seiner Genauigkeit kann erfindungsgemäß insbesondere ein optisches Trackingverfahren zum Einsatz kommen, insbesondere Outside-In-Tracking oder Inside-Out-Tracking. Darüber hinaus wird eine verbesserte Wiedergabe von Daten in der erweiterten Realität erfindungsgemäß erreicht, indem Fehler, die beim Ermitteln des Sichtfelds des Insassen entstehen, durch einen Abgleich mit einem real gefilmten Sichtfeld des Insassen, ermittelt werden. Fehler können beim Tracking beispielsweise durch Sensoren, eine Optik, Algorithmen oder in den Positionen von natürlichen oder künstlichen Markern entstehen, beispielsweise, wenn die Position von Markern in verschiedenen Fahrzeugen, durch eine Reparatur, Alterung oder thermische Effekte schwankt. Das erfindungsgemäße Verfahren und die erfindungsgemäße Vorrichtung ermöglichen es, eine nahezu perfekte Deckungsgleichheit zwischen Wiedergabe einer erweiterten Realität in einem Head-Mounted-Device und der real sichtbaren Bildausschnitte des Sichtfelds des Fahrers herzustellen, indem diese Fehler korrigiert werden.

Durch den Schritt des Abgleichens von Bildinformationen zur Korrektur von Fehlern, welche durch das Head-Tracking selbst oder beim Zusammensetzen der Daten des Head-Trackings und des Fahrzeugs sowie der Umgebung des Fahrzeugs entstehen, kann eine besonders gute Anpassung der virtuellen Überlagerung an die Realität erreicht werden. Insbesondere ist der Vergleich der Bilddaten nicht abhängig von theoretischen Überlegungen und Messungen in Bezug auf die Position und Blickrichtung des Insassen.

In einer vorteilhaften Ausgestaltung der erfindungsgemäßen Vorrichtung ist das Head-Mounted-Device im Sichtfeld des Fahrers semitransparent ausgebildet, so dass der Insasse eine reale Umgebung seines Sichtfelds sowie Überblendung der erweiterten Realität wahrnehmen kann.

In einer weiteren vorteilhaften Ausgestaltung der erfindungsgemäßen Vorrichtung ist die erste Kamera außen am Fahrzeug angeordnet und eingerichtet, im Wesentlichen in jenem Teil des Außenbereichs zu filmen, welcher im Sichtfeld des Insassen durch das eine oder die mehreren Fahrzeuge verdeckt wird.

In einer weiteren vorteilhaften Ausgestaltung der erfindungsgemäßen Vorrichtung ist die zweite Kamera im Inneren des Fahrzeugs angeordnet, insbesondere am Kopf der Insassen oder am Head-Mounted-Device.

In einer weiteren vorteilhaften Ausgestaltung des erfindungsgemäßen Verfahrens ist die zweite Kamera an der Sichtachse des Head-Mounted-Device oder des Insassen ausgerichtet.

Durch das Anordnen der zweiten Kamera am Kopf des Insassen in der Sichtachse des Head-Mounted-Device oder des Insassen kann eine Korrektur des wiedergegebenen verdeckten Bildausschnitts exakt an die Perspektive des Insassen angepasst werden. Die im Vorstehenden beschriebenen Aspekte der Erfindung und die dazugehörigen zur Weiterbildung der Vorrichtung zur Wiedergabe von Daten in einer erweiterten Realität für einen Insassen eines Fahrzeugs offenbarten Merkmale und Vorteile gelten auch für die nachstehend beschriebenen Aspekte der Erfindung und der dazugehörigen Weiterbildung des Verfahrens zur Wiedergabe von Daten in einer erweiterten Realität für einen Insassen eines Fahrzeugs offenbarten Merkmale und Vorteile entsprechend und umgekehrt.

In einer vorteilhaften Ausgestaltung des erfindungsgemäßen Verfahrens betrifft das erste Filmen im Wesentlichen jenen Teil des Außenbereichs, welcher im Sichtfeld des Fahrers durch das eine oder die mehreren Fahrzeugteile verdeckt wird. Hierdurch können Informationen über den Bildabschnitt des Sichtfelds gewonnen wer-den, welcher durch das Fahrzeugteil verborgen wird.

In einer weiteren vorteilhaften Ausgestaltung des erfindungsgemäßen Verfahrens schließt das Abgleichen ein Prüfen ein, ob die zweiten Daten inhaltlich mit den ersten Daten, insbesondere wenigstens ob ein bestimmtes Merkmal und/oder Objekt im gefilmten Außenbereich und dem gefilmten Sichtfeld zusammenpassen. Durch eine inhaltliche Prüfung der Daten können Kontextinformationen in den einzelnen Bildabschnitten verwendet werden, um die erfindungsgemäße Bildkorrektur durchzuführen. Hierdurch können Fehler, welche durch alleiniges Fortführen von Verläufen bei einer Korrektur entstehen, vermieden werden.

Das erfindungsgemäße Verfahren weist des Weiteren den Schritt des Erkennens wenigstens eines Merkmals und/oder Objekts auf, welches sich sowohl im gefilmten Außenbereich als auch im gefilmten Sichtfeld erstreckt. Als Grundlage für das Abgleichen, indem ein spezielles Merkmal bzw. Objekt für den Abgleich identifiziert wird, kann die Korrektur anhand der bekannten Informationen über ein solches Merkmal oder Objekt, z. B. die Position von Scheinwerfern an einem Fahrzeug, korrigiert werden.

Gemäß dem erfindungsgemäßen Verfahren weisen die zweiten Daten keine Bildinformation über den Außenbereich in dem wenigstens einen verdeckten Bildabschnitt auf.

Erfindungsgemäß findet die Korrektur nicht anhand einer für den Insassen oder eine Kamera sichtbaren Überlagerung der korrigierten ersten Daten über den verdeckten Bildausschnitt in der erweiterten Realität statt. Vielmehr findet der Abgleich rein virtuell im System statt, wobei insbesondere aus den nicht verdeckten, sichtbaren Konturen bzw. aus deren Verlauf auf die Position der verdeckten Konturen im Sichtfeld des Insassen geschlossen werden muss.

Weitere Merkmale, Vorteile und Anwendungsmöglichkeiten der Erfindung ergeben sich aus der nachfolgenden Beschreibung in Zusammenhang mit den Figuren. Es zeigt:
Fig.1 eine teilweise schematische Darstellung eines verdeckten Bildausschnitts im Sichtfeld eines Insassen;
Fig. 2 eine teilweise schematische Darstellung einer durch das gesamte Sichtfeld eines Insassen verlaufenden Kontur;
Fig. 3 eine teilweise schematische Darstellung eines Systems des Standes der Technik zur Vervollständigung des Sichtfelds eines Insassen;
Fig. 4 eine teilweise schematische Darstellung des Sichtfelds eines Insassen in einer erweiterten Realität;
Fig. 5 eine teilweise schematische Darstellung einer Ausführungsform einer erfindungsgemäßen Vorrichtung;
Fig. 6 eine teilweise schematische Darstellung eines Sichtfelds eines Insassen, wobei die virtuelle Realität durch das erfindungsgemäße Verfahren korrigiert ist und
Fig. 7 ein Flussdiagramm einer Ausführungsform eines erfindungsgemäßen Verfahrens.

In der in Fig. 3 dargestellten Vorrichtung des Standes der Technik wird ein Bildausschnitt 6, welcher für einen Insassen 1 durch ein nicht-transparentes Fahrzeugteil 7 verdeckt wird, mit einer ersten Kamera 3, welche vorzugsweise außen am Fahrzeug angeordnet ist, gefilmt. Dieses Bild wird auf Grundlage einer vorbestimmten, fiktiven Position des Insassen 1 durch Mittel zum Erstellen einer virtuellen Realität auf das nicht-transparente Fahrzeugteil 7 überblendet.

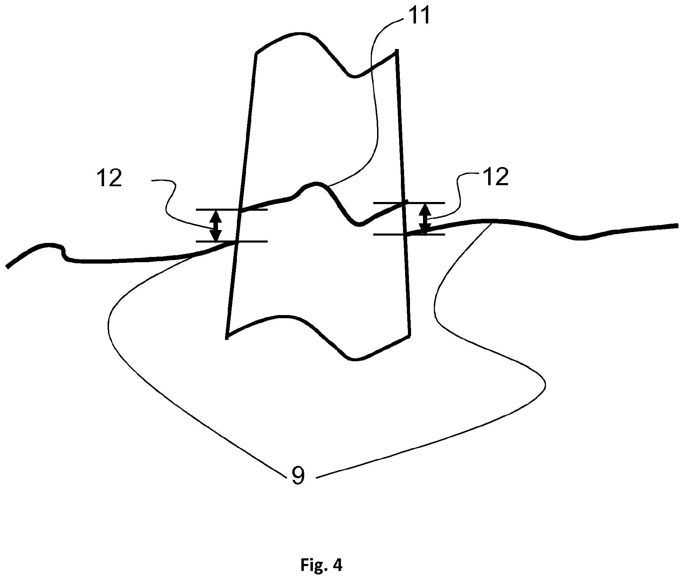

Wie in Fig. 4 gezeigt, entstehen durch Abweichungen der tatsächlichen Position des Insassen 1 von der vorbestimmten Position, durch fehlerbehaftete Installation der ersten Kamera 3 sowie etwaiger technischer Einrichtungen zur Bestimmung der Blickrichtung des Insassen 1 Abweichungen 12 der überblendeten Darstellung 11 eines Objekts von der tatsächlich durch einen Fahrer wahrnehmbaren Umgebung 9. Diese Abweichungen 12 können, wie dargestellt, eine Verschiebung der Überblendung in vertikaler Richtung hervorrufen. Alternativ oder zusätzlich kann die Überblendung 11 aber auch in horizontaler Richtung verschoben sein oder die Berechnung der virtuellen Entfernung der Überblendung 11 zum Insassen 1 kann fehlerhaft sein, was zu einer fehlerhaften Größe der dargestellten Überblendung 11 führt. Zudem können auch die Orientierung oder die Perspektive falsch sein.

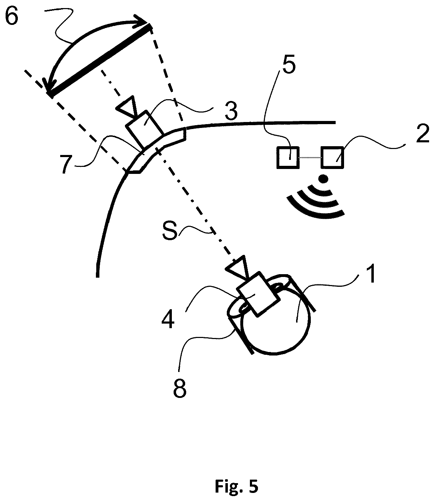

Fig. 5 zeigt eine Ausführungsform einer erfindungsgemäßen Vorrichtung. Bei dieser wird die Position und Blickrichtung des Insassen 1 vorzugsweise durch einen Head-Tracker 2 bestimmt, welcher zum Ermitteln eines Sichtfelds des Insassen 1 wenigstens die Bewegung des Kopfes des Insassen 1 nachverfolgt. Hierfür können sowohl Head-Tracker mittels eines Inertial-Sensors (IMU) wie auch Outside-In-Tracking oder Inside-Out-Tracking zum Einsatz kommen, welche auf optischen Tracking-Methoden basieren. Aufgrund der mittels des Head-Trackers 2 gewonnen Daten kann das Sichtfeld des Insassen 1 ermittelt werden. Die Information über dieses Sichtfeld wird vorzugsweise an eine Verarbeitungseinrichtung 5 weitergegeben. Der Head-Tracker 2 und die Bearbeitungseinrichtung sind vorzugsweise in einem Head-Mounted-Device integriert. Die Bearbeitungseinrichtung 5 verarbeitet diese Information über das Sichtfeld sowie eine durch eine erste Kamera 3 gefilmte Ansicht des Außenbereichs des Fahrzeugs und bestimmt erste Daten mit Bildinformationen, welche einem durch das Fahrzeugteil 7 verdeckten Bildausschnitt im Sichtfeld des Insassen 1 entsprechen. Eine zweite Kamera 4, welche vorzugsweise am Kopf des Insassen 1 und weiter vorzugsweise in der Sichtachse S des Insassen 1 oder des Head-Mounted-Device 8 angeordnet ist, filmt das Sichtfeld des Insassen 1 aus dessen Perspektive. Sowohl die Bilddaten des durch die zweite Kamera gefilmten Sichtfelds, als auch das mittels der ersten Einrichtung ermittelte Sichtfeld und der von der ersten Kamera 3 gefilmte Außenbereich des Fahrzeugs werden vorzugsweise in einer Verarbeitungseinrichtung 5 gesammelt. Diese weist ein erstes Modul auf, eingerichtet zum Bestimmen von ersten Daten auf der Grundlage des erfassten Sichtfelds und des gefilmten Außenbereichs, welche wenigstens dem Bildausschnitt 6 in dem Sichtfeld, welcher von dem Fahrzeugteil 7 verdeckt wird, entspricht. Des Weiteren weist die Verarbeitungseinrichtung 5 ein zweites Modul auf, welches auf der Grundlage des gefilmten Sichtfelds zweite Daten bestimmt, welche den wenigstens einen verdeckten Bildausschnitt charakterisieren. Hierbei kommen insbesondere Konturen der Landschaft oder von Objekten in Frage, welche sich sowohl im sichtbaren Bildausschnitt wie auch im nicht sichtbaren Bildausschnitt 6 des Sichtfelds des Insassen 1 erstrecken. Weiter weist die Verarbeitungseinrichtung 5 ein drittes Modul auf, welches zum Abgleichen der ersten Daten mit den zweiten Daten eingerichtet ist. Weiter ist ein viertes

Modul vorhanden, welches die ersten Daten auf der Grundlage der zweiten Daten korrigiert, d.h., welches die Bildinformationen des verdeckten Bildausschnitts 6 auf der Grundlage der Informationen über das reale Sichtfeld des Insassen 1, welches durch die erste Kamera 3 gewonnen wird, korrigiert. Die korrigierten ersten Daten, d.h. die Bildinformationen, werden dem Fahrer in dem Head-Mounted-Device 8 vorzugsweise in seine reale Ansicht überblendet. Hierfür weist das Head-Mounted-Device 8 vorzugsweise semitransparente Scheiben auf, auf welchen die Überblendung vorgenommen werden kann. Ein Vorteil der Erfindung besteht darin, dass für die erfindungsgemäße Korrektur keine reale Überblendung auf dem Fahrzeugteil 7 notwendig ist. Ein Abgleich von ersten Daten mit zweiten Daten findet rein virtuell in der Verarbeitungseinrichtung 5 statt. Somit ergeben sich für den Insassen auch keine erkennbaren Fehler bei der Überblendung in dem Head-Mounted-Device, da allein Bildinformationen basierend auf bereits korrigierten Daten angezeigt werden.

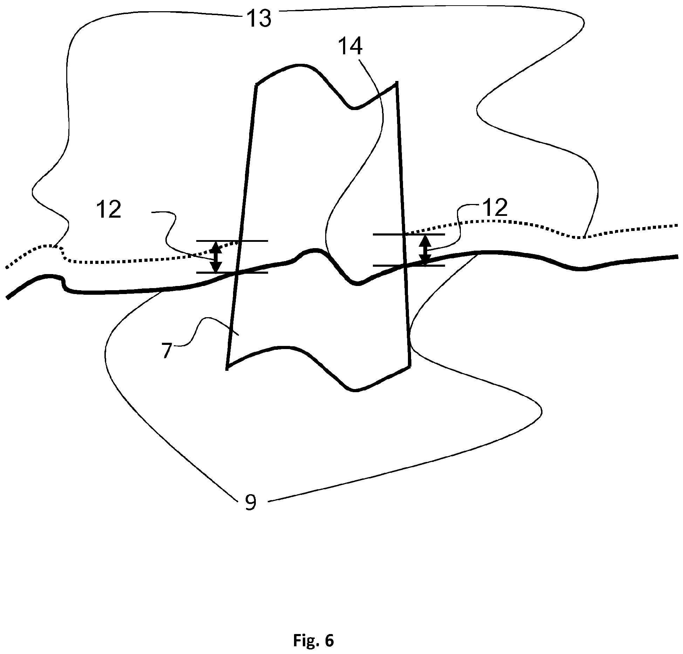

Fig. 6 zeigt schematisch anhand des Sichtfelds des Insassen 1 wie eine Korrektur durch die Verarbeitungseinrichtung 5 vorzugsweise erfindungsgemäß vorgenommen wird. Anhand der Bildinformationen der zweiten Kamera 4 über den Außenbereich in dem wenigstens einen nicht verdeckten Bildausschnitt des Sichtfelds 9 kann ein Fehler bzw. eine Abweichung 12 anhand des mit der ersten Einrichtung 2 ermittelten Sichtfelds und der ersten Kamera 3 bestimmten Kontur 13 eines Objekts oder der Landschaft festgestellt werden. Die ersten Daten, welche dem durch das Fahrzeug 7 verdeckten Bildausschnitt entsprechen, werden auf der Grundlage der Abweichungen 12 so (perspektivisch) korrigiert bzw. verschoben bzw. rotiert, dass sich an den Rändern des nicht transparenten Fahrzeugteils 7 ein stetiger Übergang zwischen Konturen eines Objekts oder der Landschaft ergeben.

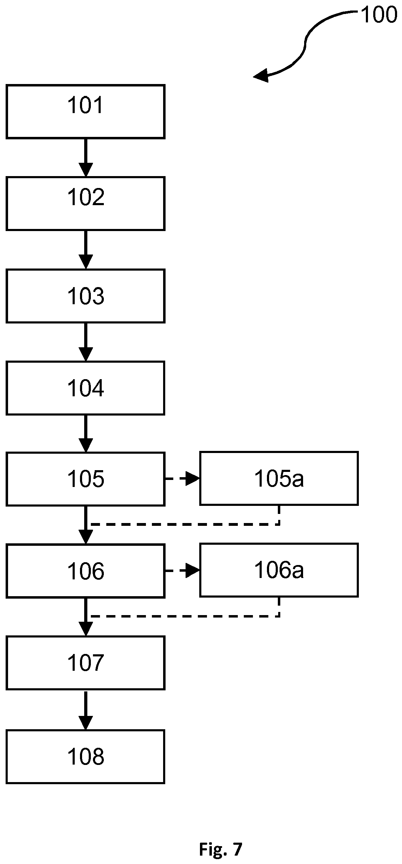

Fig. 7 zeigt teilweise schematisch den Ablauf einer Ausführungsform des erfindungsgemäßen Verfahrens 100 sowie der Wiedergabe von Daten in einer erweiterten Realität für einen Insassen 1 eines Fahrzeugs. Zunächst wird ein Sichtfeld des Insassen 1 ermittelt 101 und ein Außenbereich um das Fahrzeug, insbesondere jener Außenbereich hinter einem nicht transparenten Fahrzeugteil 7, gefilmt 102. Auf der Grundlage des ermittelten Sichtfelds, des gefilmten Außenbereichs sowie der Position des Insassen 1 werden erste Daten bestimmt 103, welche Bilddaten wenigstens eines Bildausschnitts in dem Sichtfeld, welcher von einem oder mehreren Fahrzeugteilen 7 verdeckt wird, entsprechen. Zur Kontrolle, ob diese ersten Daten tatsächlich im verdeckten Bildausschnitt aus der Sicht des Insassen 1 entsprechen, wird das Sichtfeld insbesondere mittels einer zweiten Kamera 4 gefilmt 104, wobei eine Perspektive der Sichtachse S eines Head-Mounted-Device 8, insbesondere einer Datenbrille oder des Insassen, eingenommen wird. Anhand des durch die zweite Kamera gefilmten Sichtfelds werden zweite Daten bestimmt 105, welche den wenigstens einen verdeckten Bildausschnitt charakterisieren. Dies können insbesondere markante Punkte am Rand des nicht verdeckten Bildausschnitts sein. Bildinformationen über den wenigstens einen verdeckten Bildausschnitt 6 enthalten die zweiten Daten nicht. Bei der Bestimmung 105 wird wenigstens ein Merkmal und/oder Objekt in den Bildinformationen erkannt, welche sich sowohl in dem gefilmten Außenbereich als auch in dem gefilmten Sichtfeld erstrecken. Auf der Grundlage dieses Merkmals und/oder Objekts wird ein Abgleich der ersten Daten mit den zweiten Daten vorgenommen 106 und die ersten Daten werden auf der Grundlage der zweiten Daten korrigiert 107, d.h., der Bildausschnitt 6 oder die wiedergegebene Bildinformation in dem Außenbereich, welcher durch das Fahrzeugteil 7 verdeckt wird, werden in der Weise korrigiert, dass sich am Rand des Fahrzeugteils für den Insassen 1 ein stetiger Übergang beim Betrachten einer Wiedergabe 108 der korrigierten ersten Daten als erweiterte Realität, insbesondere als Überblendung, für den wenigstens einen verdeckten Bildausschnitt in dem Head-Mounted-Device 8 ergibt. Bei dem Abgleich wird vorzugsweise geprüft 106a, ob die zweiten Daten inhaltlich mit den ersten Daten, insbesondere wenigstens ein bestimmtes Merkmal und/oder Objekt der gefilmten Außenbereiche und dem gefilmten Sichtfeld, zusammenpassen, wobei insbesondere auf ein solches Merkmal und/oder Objekt zurückgegriffen wird, welches vorher erkannt wird 105a.

### Bezugszeichenliste

- 1: Insasse
- 2: Erste Einrichtung
- 3: Erste Kamera
- 4: Zweite Kamera
- 5: Verarbeitungseinrichtung
- 6: Bildausschnitt
- 7: Fahrzeugteil
- 8: Head-Mounted-Device
- 9, 10: Kontur der Landschaft/Objekt im Sichtfeld eines Insassen
- 11: Berechnete Kontur der Landschaft/eines Objekts
- 12: Fehler
- 13: Position einer gefilmten Kontur der Landschaft/eines Objekts
- 14: Korrigierte, verdeckte Kontur der Landschaft/eines Objekts

## Patentansprüche

1. Vorrichtung zur Wiedergabe von Daten in einer erweiterten Realität für einen Insassen (1) eines Fahrzeugs, insbesondere für einen Fahrer, aufweisend:
eine erste Einrichtung (2), eingerichtet zum Ermitteln eines Sichtfelds des Insassen (1), insbesondere ein Headtracker mit MEMS und/oder ein optischer Headtracker,
eine erste Kamera (3), eingerichtet zum Filmen eines Außenbereichs des Fahrzeugs;
eine zweite Kamera (4), eingerichtet zum Filmen des Sichtfelds,
eine Verarbeitungseinrichtung (5) mit wenigstens einem ersten Modul,
eingerichtet zum Bestimmen von ersten Daten auf der Grundlage des erfassten Sichtfelds und des gefilmten Außenbereichs, welche wenigstens einem Bildausschnitt (6) in dem Sichtfeld, welcher von einem oder mehreren Fahrzeugteilen (7), insbesondere einer Fahrzeugsäule und/oder Fahrzeugwand, verdeckt wird, entsprechen;
ein Head-Mounted-Device (8), insbesondere eine Datenbrille,
**dadurch gekennzeichnet, dass**
die Verarbeitungseinrichtung (5) ein zweites Modul aufweist, eingerichtet zum Bestimmen von zweiten Daten auf der Grundlage des gefilmten Sichtfelds,
welche den wenigstens einen verdeckten Bildausschnitt charakterisieren, wobei die zweiten Daten keine Bildinformation über den Außenbereich in dem wenigstens einen verdeckten Bildausschnitt (6) an sich enthalten die Verarbeitungseinrichtung ein drittes Modul aufweist, eingerichtet zum Abgleichen der ersten Daten mit den zweiten Daten, wobei wenigstens ein Merkmal und/oder Objekt, welches sich sowohl in dem gefilmten Außenbereich als auch in dem gefilmten Sichtfeld erstreckt, als Grundlage für das Abgleichen erkannt wird, und
die Verarbeitungseinrichtung (5) ein viertes Modul aufweist, eingerichtet zum Korrigieren der ersten Daten auf der Grundlage der zweiten Daten; und das Head-Mounted-Device (8) zum Wiedergeben der korrigierten ersten Daten als erweiterte Realität in dem wenigstens einen verdeckten Bildausschnitt eingerichtet ist.

2. Vorrichtung nach Anspruch 1, wobei das Head-Mounted-Device (8) im Sichtfeld des Fahrers semitransparent ausgebildet ist, so dass der Insasse (1) eine reale Umgebung in seinem Sichtfeld sowie Überblendungen der erweiterten Realität wahrnehmen kann.

3. Vorrichtung nach Anspruch 1 oder 2, wobei die erste Kamera (3) außen am Fahrzeug angeordnet ist und eingerichtet ist, im Wesentlichen jenen Teil des Außenbereichs zu filmen, welcher im Sichtfeld des Insassen (1) durch das eine oder die mehreren Fahrzeugteile (7) verdeckt wird.

4. Vorrichtung nach einem der Ansprüche 1 bis 3, wobei die zweite Kamera (4) im Inneren des Fahrzeugs angeordnet ist, insbesondere am Kopf des Insassen (1) oder an dem Head-Mounted-Device (8).

5. Vorrichtung nach einem der Ansprüche 1 bis 4, wobei die zweite Kamera (4) an der Sichtachse (S) des Head-Mounted-Devices oder des Insassen (1) ausgerichtet ist.

6. Fahrzeug, insbesondere ein hochautomatisiertes oder vollautomatisiertes Fahrzeug, aufweisend eine Vorrichtung nach einem der Ansprüche 1 bis 5.

7. Verfahren (100) zur Wiedergabe von Daten in einer erweiterten Realität für einen Insassen (1) eines Fahrzeugs, insbesondere für einen Fahrer, folgende Arbeitsschritte aufweisend:
Ermitteln (101) eines Sichtfelds des Insassen (1), insbesondere mittels Headtracking;
erstes Filmen (102) wenigstens eines Außenbereichs um das Fahrzeug;
erstes Bestimmen (103) von ersten Daten auf der Grundlage des erfassten Sichtfelds und des gefilmten Außenbereichs, welche wenigstens einem Bildausschnitt in dem Sichtfeld, welcher von einem oder mehreren Fahrzeugteilen (7), insbesondere einer Fahrzeugsäule und/oder Fahrzeugwand, verdeckt wird, entsprechen; und
zweites Filmen (104) des Sichtfelds, insbesondere aus einer Perspektive, die an der Sichtachse (S) eines Head-Mounted-Devices (8), insbesondere einer Datenbrille oder des Insassen (1) ausgerichtet ist;
**gekennzeichnet durch** folgende Arbeitsschritte:
zweites Bestimmen (105) von zweiten Daten auf der Grundlage des gefilmten Sichtfelds, welche den wenigstens einen verdeckten Bildausschnitt charakterisieren, wobei die zweiten Daten keine Bildinformation über den Außenbereich in dem wenigstens einen verdeckten Bildausschnitt (6) an sich enthalten
Erkennen (105a) wenigstens eines Merkmals und/oder Objekts, welches sich sowohl in dem gefilmten Außenbereich als auch in dem gefilmten Sichtfeld erstreckt, als Grundlage für ein Abgleichen der ersten Daten mit den zweiten Daten;
Abgleichen (106) der ersten Daten mit den zweiten Daten;
Korrigieren (107) der ersten Daten auf der Grundlage der zweiten Daten; und
Wiedergeben (108) der korrigierten ersten Daten als erweiterte Realität für den wenigstens einen verdeckten Bildausschnitt in dem Head-Mounted-Device (8).

8. Verfahren (100) nach Anspruch 7, wobei das erste Filmen (102) im Wesentlichen jenen Teil (6) des Außenbereichs (9, 10) betrifft, welcher im Sichtfeld des Fahrers durch das eine oder die mehreren Fahrzeugteile (7) verdeckt wird.

9. Verfahren (100) nach Anspruch 7 oder 8, wobei das Abgleichen (106) den folgenden Arbeitsschritt einschließt:
Prüfen (106a), ob die zweiten Daten inhaltlich mit den ersten Daten, insbesondere wenigstens ein bestimmtes Merkmal und/oder Objekt in dem gefilmten Außenbereich und dem gefilmten Sichtfeld, zusammenpassen.

10. Computerprogramm, das Anweisungen umfasst, welche, wenn sie von einem Computer ausgeführt werden, diesen dazu veranlassen, die Arbeitsschritte eines Verfahrens (100) gemäß einem der Ansprüche 7 bis 9 ausführen.

11. Computer-lesbares Medium, auf welchem ein Computerprogramm nach Anspruch 10 gespeichert ist.

## Claims

1. Apparatus for reproducing data in an extended reality for an occupant (1) of a vehicle, in particular for a driver, having:
a first device (2), configured for ascertaining a field of view of the occupant (1), in particular a head tracker with MEMS and/or an optical head tracker,
a first camera (3), configured for filming an external region of the vehicle,
a second camera (4), configured for filming the field of view;
a processing device (5) having at least one first module, configured for determining first data on the basis of the captured field of view and the filmed external region, which correspond to at least one image detail (6) in the field of view that is obscured by one or more vehicle parts (7), in particular a vehicle pillar and/or a vehicle wall;
a head-mounted device (8), in particular smartglasses,
**characterized in that**
the processing device (5) has a second module, configured for determining second data on the basis of the filmed field of view, which characterize the at least one obscured image detail, wherein the second data contain no image information relating to the external region in the at least one obscured image detail (6) per se;
the processing device has a third module, configured for comparing the first data with the second data, wherein at least one feature and/or object extending both in the filmed external region and in the filmed field of view is recognized as a basis for the comparison, and
the processing device (5) has a fourth module, configured for correcting the first data on the basis of the second data, and
the head-mounted device (8) is configured for reproducing the corrected first data as extended reality in the at least one obscured image detail.

2. Apparatus according to Claim 1, wherein the head-mounted device (8) is designed to be semi-transparent in the field of view of the driver, and the occupant (1) can therefore perceive a real environment in their field of view and also overlays of the extended reality.

3. Apparatus according to Claim 1 or 2, wherein the first camera (3) is arranged outside on the vehicle and is configured to film essentially that part of the external region that is obscured in the field of view of the occupant (1) by the one or the plurality of vehicle parts (7).

4. Apparatus according to one of Claims 1 to 3, wherein the second camera (4) is arranged in the interior of the vehicle, in particular on the head of the occupant (1) or on the head-mounted device (8).

5. Apparatus according to one of Claims 1 to 4, wherein the second camera (4) is aligned with the visual axis (S) of the head-mounted device or of the occupant (1).

6. Vehicle, in particular a highly automated or fully automated vehicle, having an apparatus according to one of Claims 1 to 5.

7. Method (100) for reproducing data in an extended reality for an occupant (1) of a vehicle, in particular for a driver, having the following work steps:
ascertaining (101) a field of view of the occupant (1), in particular by means of head tracking,
first filming (102) of at least one external region around the vehicle;
first determining (103) of first data on the basis of the captured field of view and the filmed external region,
which correspond to at least one image detail in the field of view that is obscured by one or more vehicle parts (7), in particular a vehicle pillar and/or a vehicle wall; and
second filming (104) of the field of view, in particular from a perspective that is aligned with the visual axis (S) of a head-mounted device (8), in particular smartglasses, or of the occupant (1);
**characterized by** the following work steps:
second determining (105) of second data on the basis of the filmed field of view, which characterize the at least one obscured image detail, wherein the second data contain no image information relating to the external region in the at least one obscured image detail (6) per se;
recognizing (105a) at least one feature and/or object extending both in the filmed external region and in the filmed field of view as a basis for a comparison of the first data with the second data;
comparing (106) the first data with the second data;
correcting (107) the first data on the basis of the second data; and
reproducing (108) the corrected first data as extended reality for the at least one obscured image detail in the head-mounted device (8).

8. Method (100) according to Claim 7, wherein the first filming (102) relates to essentially that part (6) of the external region (9, 10) that is obscured in the field of view of the driver by the one or the plurality of vehicle parts (7).

9. Method (100) according to Claim 7 or 8, wherein the comparison (106) includes the following work step:
checking (106a) if the second data match the first data in terms of content, in particular at least one specific feature and/or object in the filmed external region and the filmed field of view.

10. Computer program, comprising instructions that, upon execution by a computer, cause the latter to carry out the work steps of a method (100) according to one of Claims 7 to 9.

11. Computer-readable medium, on which a computer program according to Claim 10 is stored.

## Revendications

1. Dispositif de reproduction de données en réalité augmentée destinées à un occupant (1) d'un véhicule, en particulier à un conducteur, le dispositif comportant :
un premier moyen (2) conçu pour déterminer un champ de vision de l'occupant (1), en particulier un système de poursuite de tête (head tracker) pourvu d'un système microélectromécanique (MEMS) et/ou un système de poursuite de tête optique,
une première caméra (3) conçue pour filmer une zone extérieure du véhicule ;
une deuxième caméra (4) conçue pour filmer le champ de vision,
un moyen de traitement (5) muni d'au moins un premier module conçu pour déterminer des premières données sur la base du champ de vision détecté et de la zone extérieure filmée, lesquelles correspondent au moins à une section d'image (6) dans le champ de vision qui est masquée par une ou plusieurs parties de véhicule (7), en particulier un montant de véhicule et/ou une paroi de véhicule ;
un dispositif de tête (8), en particulier des lunettes de données,
**caractérisé en ce que**
le moyen de traitement (5) comporte un deuxième module conçu pour déterminer des deuxièmes données sur la base du champ de vision filmé, lesquelles caractérisent l'au moins une section d'image masquée, les deuxièmes données ne contenant en soi aucune information d'image sur la zone extérieure dans l'au moins une section d'image masquée (6),
le moyen de traitement comporte un troisième module conçu pour comparer les premières données aux deuxièmes données, au moins un élément caractéristique et/ou un objet, qui s'étend aussi bien dans la zone extérieure filmée que dans le champ de vision filmé, étant détectés comme base pour la comparaison, et
le moyen de traitement (5) comporte un quatrième module conçu pour corriger les premières données sur la base des deuxièmes données ; et
le dispositif de tête (8) est conçu pour reproduire les premières données corrigées sous la forme de réalité augmentée dans l'au moins une section d'image masquée.

2. Dispositif selon la revendication 1, le dispositif de tête (8) étant semi-transparent dans le champ de vision du conducteur afin que l'occupant (1) puisse percevoir un environnement réel dans son champ de vision ainsi que des fondus enchaînés de la réalité augmentée.

3. Dispositif selon la revendication 1 ou 2, la première caméra (3) étant disposée à l'extérieur du véhicule et étant conçue pour filmer sensiblement la partie de la zone extérieure qui est masquée dans le champ de vision de l'occupant (1) par l'une des parties du véhicule (7) ou la pluralité de parties du véhicule (7) .

4. Dispositif selon l'une des revendications 1 à 3, la deuxième caméra (4) étant disposée à l'intérieur du véhicule, notamment sur la tête de l'occupant (1) ou sur le dispositif de tête (8).

5. Dispositif selon l'une des revendications 1 à 4, la deuxième caméra (4) étant alignée sur l'axe de vision (S) du dispositif de tête ou de l'occupant (1).

6. Véhicule, en particulier un véhicule hautement automatisé ou entièrement automatisé, comportant un dispositif selon l'une des revendications 1 à 5.

7. Procédé (100) de reproduction de données en réalité augmentée destinées à un occupant (1) d'un véhicule, en particulier à un conducteur, le procédé comprenant les étapes de travail suivantes :
déterminer (101) un champ de vision de l'occupant (1), notamment au moyen d'une opération de poursuite de tête ;
effectuer un premier filmage (102) d'au moins une zone extérieure autour du véhicule ;
effectuer une première détermination (103) de premières données sur la base du champ de vision détecté et de la zone extérieure filmée, lesquelles correspondent à au moins une section d'image dans le champ de vision qui est masqué par une ou plusieurs parties de véhicule (7), notamment un montant de véhicule et/ou une paroi de véhicule ; et
effectuer un deuxième filmage (104) du champ de vision, en particulier depuis une perspective qui est alignée sur l'axe de vision (S) d'un dispositif de tête (8), notamment de lunettes de données ou de l'occupant (1) ;
**caractérisé par** les étapes de travail suivantes :
effectuer une deuxième détermination (105) de deuxièmes données sur la base du champ de vision filmé, lesquelles caractérisent l'au moins une section d'image masquée, les deuxièmes données ne contenant en soi aucune information d'image sur la zone extérieure dans l'au moins une section d'image masquée (6),
détecter (105a) au moins un élément caractéristique et/ou un objet qui s'étend aussi bien dans la zone extérieure filmée que dans le champ de vision filmé, comme base pour la comparaison des premières données avec les deuxièmes données ;
adapter (106) les premières données aux deuxièmes données ; corriger (107) des premières données sur la base des deuxièmes données ; et
reproduire (108) les premières données corrigées comme réalité augmentée pour l'au moins une section d'image masquée dans le dispositif de tête (8).

8. Procédé (100) selon la revendication 7, le premier filmage (102) concernant sensiblement la partie (6) de la zone extérieure (9, 10) qui est masquée dans le champ de vision du conducteur par l'une des parties de véhicule (7) ou la pluralité de parties de véhicule (7) .

9. Procédé (100) selon la revendication 7 ou 8, l'ajustement (106) comprenant l'étape de travail suivante :
vérifier (106a) si les deuxièmes données correspondent en termes de contenu aux premières données, en particulier au moins un élément caractéristique et/ou un objet déterminés dans la zone extérieure filmée et le champ de vision filmé.

10. Logiciel comprenant des instructions qui, lorsqu'elles sont exécutées par un ordinateur, ordonnent à celui-ci d'exécuter les étapes de travail d'un procédé (100) selon l'une des revendications 7 à 9.

11. Support lisible par ordinateur sur lequel est mémorisé un logiciel selon la revendication 10.
